# EUROPEAN PATENT APPLICATION

(11) **EP 4 674 997 A1**
(43) Date of publication of application: **07.01.2026**
(21) Application number: 24788674.0
(22) Date of filing: 05.04.2024
(51) Int. Cl.: C22C 21/00, B23K 1/00, B23K 1/19, F28D 1/053, F28F 1/32, F28F 19/06, F28F 21/08, B23K 101/14, B23K 103/10

(54) **HEAT EXCHANGER CORE AND METHOD FOR MANUFACTURING SAME**

(30) Priority: 11.04.2023 JP 2023064178
(71) Applicant: UACJ Corporation, Chiyoda-ku Tokyo 100-0004 (JP)
(72) Inventor: SHOJI Tomohiro, Tokyo 100-0004 (JP); NAKAMURA Shinichi, Tokyo 100-0004 (JP); TOTANI Yuki, Tokyo 100-0004 (JP); DOKO Takeyoshi, Tokyo 100-0004 (JP)
(74) Representative: Kramer Barske Schmidtchen Patentanwälte PartG mbB
(86) International application number: PCT/JP2024/014108
(87) International publication number: WO 2024/214650

(57) **Abstract**

A heat exchanger core (1) has fins (2), tubes (3), and brazed joints (4) that join the fins (2) and the tubes (3). The fins (2) are composed of an aluminum alloy, which has a chemical composition comprising Si: 2.0 to 3.0 mass%, Fe: 0.05 to 1.2 mass%, Cu: 0.25 mass% or less, Mn: 0.3 to 1.8 mass%, and Zn: 0.3 to 5.0 mass%, the balance consisting of Al and unavoidable impurities. The tubes (3) are composed of an aluminum alloy extruded material containing Cu: more than 0.05 mass% and 0.6 mass% or less. A sacrificial anode layer (31) is formed on the outer surface of the tubes (3). The natural electrode potential of the sacrificial anode layer (31), the natural electrode potential of the inner surface of the tubes (3), the natural electrode potential of fillets in the brazed joints (4), and the natural electrode potential of the fins (2) satisfy specific conditions.

## Description

### TECHNICAL FIELD

The present invention relates to a heat exchanger core and a method for manufacturing the same.

### BACKGROUND ART

Parallel flow heat exchangers made of aluminum alloys are used, for example, in automotive radiators, condensers and evaporators for air-conditioning devices installed in automobiles, and the like. This type of heat exchanger has a heat exchanger core, which includes a plurality of tubes configured to allow flow of a heat transfer medium, and a plurality of fins. In the core of the parallel flow heat exchanger, the tubes and fins are stacked in an alternating manner and joined to each other via brazed joints.

Conventionally, brazing sheets having a brazing material provided on at least one surface of a core material have been widely used as fins for heat exchanger cores. Meanwhile, in recent years, it has been proposed to use a single layer aluminum alloy material having the function of forming brazed joints with a mating material for the fins.

For example, Patent Document 1 describes a fin material for heat exchangers, which is made from an aluminum alloy comprising Si: 1.0 to 5.0 mass%, Fe: 0.01 to 2.0 mass%, and Mn: 0.05 to 2.0 mass%, the balance consisting of Al and unavoidable impurities, and which has a thermal bonding function in a single layer at a temperature at which the liquid phase ratio is 5% or more and 35% or less.

### PRIOR ART LITERATURE

### Patent Document

Japanese Patent No. 5698416

### SUMMARY OF THE INVENTION

### PROBLEMS TO BE SOLVED BY THE INVENTION

Incidentally, a method that causes the outer surface of a tube to function as a sacrificial anode with respect to the interior of the tube by forming a sprayed Zn coating on the outer surface of the tubes is known as a method that increases the corrosion resistance of heat exchanger cores. However, when tubes provided with a sprayed Zn coating were combined with the fin material for heat exchangers of Patent Document 1, early progression of corrosion of the brazed joints and the fin material sometimes led to decreases in the corrosion resistance of the heat exchanger core.

The present invention was made in consideration of this background, and it is directed to providing a heat exchanger core having a corrosion resistance that excels and a method for manufacturing the same.

### MEANS FOR SOLVING THE PROBLEMS

One aspect of the present invention is a heat exchanger core having:
(a) fin(s), having a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 5.0 mass% or less, the balance consisting of Al and unavoidable impurities;
(a) tube(s), made from an aluminum alloy extruded material containing Cu: more than 0.05 mass% and 0.6 mass% or less; and
(a) brazed joint(s), joining the fin(s) and the tube(s), wherein:
   a sacrificial anode layer, which has a natural electrode potential lower than that at an inner surface of the tube(s), is formed on an outer surface of the tube(s), and
   the four conditions of: (1) the natural electrode potential of the inner surface of the tube(s), when the natural electrode potential of the sacrificial anode layer is used as the reference, is +50 mV or more; (2) the natural electrode potential of the sacrificial anode layer, when the natural electrode potential of (a) fillet(s) in the brazed joint(s) is (are) used as the reference, is +100 mV or less; (3) the natural electrode potential of the sacrificial anode layer, when the natural electrode potential of the fin(s) is used as the reference, is -80 mV or more and +150 mV or less; and (4) the natural electrode potential of the fin(s) is lower than the natural electrode potential of the fillet(s), or the natural electrode potential of the fin(s) is greater than or equal to the natural electrode potential of the fillet(s) and the absolute value of the potential difference between the natural electrode potential of the fin(s) and the average of the natural electrode potential of the fin(s), the natural electrode potential of the fillet(s), and the natural electrode potential of the sacrificial anode layer is 40 mV or less are satisfied.

In addition, another aspect of the present invention is a method for manufacturing a heat exchanger core according to the aspect described above, wherein:
an assembly is assembled by alternately overlaying the fin(s), which has (have) a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 4.0 mass% or less, the balance consisting of Al and unavoidable impurities, and the tube(s) made from an aluminum alloy extruded material containing Cu: more than 0.05 mass% and 0.6 mass% or less, and
by heating the assembly and performing brazing of the assembly in an atmosphere containing zinc vapor, the brazed joint(s) form(s) between the fin(s) and the tube(s), and the sacrificial anode layer forms on the outer surface of the tube(s).

### EFFECTS OF THE INVENTION

The fin(s) in the heat exchanger core is (are) composed of an aluminum alloy, which has the aforementioned specific chemical composition. By at least using fin(s) that have the aforementioned specific chemical composition in the heat exchanger core, the natural electrode potentials of the surface of the sacrificial anode layer, the inner surface of the tube(s), the fillet(s) in the brazed joint(s), and the fin(s) can be adjusted so that all of the aforementioned four conditions are satisfied, which was difficult to realize with conventional heat exchanger cores. Furthermore, by setting the natural electrode potential of each region in the heat exchanger core in the aforementioned manner, the corrosion resistance of the heat exchanger core can be increased.

In addition, in the method for manufacturing the heat exchanger core, the fin(s) and tube(s), which have the aforementioned specific chemical compositions, are combined to produce an assembly, and then brazing of the assembly is performed in an atmosphere containing zinc vapor. The zinc vapor in the brazing atmosphere appropriately lowers the natural electrode potential of the fin(s) and the brazed joint(s). Furthermore, the zinc vapor in the brazing atmosphere can form a sacrificial anode layer on the outer surface of the tubes.

By not only simply using the aforementioned specific fin(s) but by also performing brazing of the assembly in an atmosphere containing zinc vapor, in this manner, the natural electrode potentials of each region in the heat exchanger core can be adjusted so that all four of the aforementioned conditions are satisfied, which could not be realized with conventional heat exchanger cores. As a result, a heat exchanger core having a corrosion resistance that excels can be easily obtained.

Thus, owing to the aspects described above, a heat exchanger core having excellent corrosion resistance and a method for manufacturing the same can be provided.

### BRIEF DESCRIPTION OF THE DRAWINGS

FIG. 1 is a plan view of a heat exchanger core in an exemplary embodiment.
FIG. 2 is an enlarged view of a portion of FIG. 1.
FIG. 3 is a cross-sectional view of a tube in the exemplary embodiment.
FIG. 4 is an oblique view of a mini core test piece in an experimental example.
FIG. 5 is a schematic view of a device for measuring natural electrode potential in the experimental example.

### MODES FOR CARRYING OUT THE INVENTION

### Heat Exchanger Core

The heat exchanger core has (a) fin(s) and (a) tube(s). In addition, (a) brazed joint(s) is (are) formed between the fin(s) and the tube(s), which join(s) the two. The heat exchanger core may, for example, be configured as a core of a so-called parallel flow heat exchanger, in which fins and tubes are stacked in an alternating manner. In addition, in addition to the fin(s) and tube(s), the heat exchanger core may further be provided with (a) side plate(s), which is (are) joined to the fin(s) located outermost among a (the) plurality of fins, and with headers mounted at the two ends of the tube(s), and the like.

### Fin(s)

The fin(s) of the heat exchanger core is (are) composed of a single layer of aluminum alloy, which has a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 5.0 mass% or less, the balance consisting of Al and unavoidable impurities. The thickness of the fin(s) can be set as appropriate within the range of, for example, 0.04 mm or more and 0.15 mm or less.

The reasons for the chemical composition of fin(s) and the limits thereon are described below.

### · Si

2.0 mass% or more and 3.0 mass% or less of Si is contained in the fin(s) as an essential component. By using an Si content of 2.0 mass% or more in the fin(s), a melt containing Al and Si can be generated by the brazing heating, to form the brazed joint(s) between the fin(s) and the tube(s). The Si content is preferably 2.1 mass% or more, more preferably 2.2 mass% or more, and further preferably 2.3 mass% or more. In this case, the amount of melt generated by the brazing heating can be increased, and the brazeability can be further improved. If the Si content is less than 2.0 mass%, there is a risk of this leading to inferior brazeability because the amount of melt generated by the brazing heating is insufficient.

On the other hand, if the Si content is excessively great, there is a risk that the amount of the fin(s) that melts during brazing heating will be greater, leading to a decrease in the strength of the fin(s). As a result, there is a risk of not being able to maintain the shape of the heat exchanger core during brazing. With a view to avoiding such problems, the Si content is 3.0 mass% or less. With a view to the same, the Si content is preferably 2.9 mass% or less, more preferably 2.8 mass% or less, and further preferably 2.7 mass% or less.

In establishing the preferred range for the Si content in the fin(s), the aforementioned upper and lower limits for the Si content can be arbitrarily combined. For example, the preferred range for the Si content in the fin(s) may be 2.1 mass% or more and 2.9 mass% or less, 2.2 mass% or more and 2.8 mass% or less, or 2.3 mass% or more and 2.7 mass% or less.

### · Fe

0.05 mass% or more and 1.2 mass% or less of Fe is contained in the fin(s) as an essential component. A portion of the Fe dissolves in the Al matrix and has the function of increasing the strength of the fin(s). In addition, the balance of the Fe is dispersed in the Al matrix as crystallized products and has the function of increasing the strength of the fin(s) at ordinary temperatures and high temperatures. Furthermore, Fe has the function of making the crystal grains in the fin(s) finer. By making the crystal grains of the fin(s) finer, the melt more readily seeps out from the crystal grain boundaries during brazing heating, such that the brazeability can be improved.

Accordingly, by setting the Fe content in the fin(s) to 0.05 mass% or more, the strength and brazeability of the fin(s) can be increased. With a view to further increasing the strength and brazeability of the fin(s), the Fe content in the fin(s) is preferably 0.07 mass% or more, more preferably 0.10 mass% or more, further preferably 0.13 mass% or more, and particularly preferably 0.15 mass% or more. If the Fe content in the fin(s) is less than 0.05 mass%, there is a risk that it will lead to a decrease in the aforementioned effects.

On the other hand, if the Fe content is excessively great, coarse intermetallic compounds form more readily when casting, and there is a risk of this leading to decreases in the manufacturability of the fin(s). By setting the Fe content in the fin(s) to 1.2 mass% or less, preferably 1.0 mass% or less, more preferably 0.8 mass% or less, further preferably 0.6 mass% or less, and particularly preferably 0.4 mass% or less, the formation of coarse intermetallic compounds in the fin(s) can be curtailed.

In establishing the preferred range for the Fe content in the fin(s), the aforementioned upper and lower limits for the Fe content can be arbitrarily combined. For example, the preferred range for Fe content in the fin(s) may be 0.07 mass% or more and 1.0 mass% or less, 0.10 mass% or more and 0.8 mass% or less, 0.13 mass% or more and 0.6 mass% or less, or 0.15 mass% or more and 0.4 mass% or less.

### · Cu

0 mass% or more and 0.25 mass% or less of Cu may be contained in the fin(s) as an optional component. In the same manner as Fe, the Cu in the fin(s) dissolves in the Al matrix and has the function of increasing the strength of the fin(s). In addition, in the same manner as Fe, Cu has the function of making the crystal grains in the fin(s) finer. However, if the Cu content is excessively great, there is a risk of the quantity of melt produced from the fin(s) during brazing heating being excessively great, leading to decreases in strength at high temperatures. In addition, in this case, there is a risk that the natural electrode potential of the fin(s) will be raised, leading to a decrease in the sacrificial anticorrosion effect for the heat exchanger core.

Accordingly, by setting the Cu content in the fin(s) to 0.25 mass% or less, decreases in strength and decreases in the sacrificial anticorrosion effect at high temperatures can easily be avoided. With a view to obtaining such effects more reliably, the Cu content in the fin(s) is preferably 0 mass% or more and 0.20 mass% or less, more preferably 0 mass% or more and 0.15 mass% or less, further preferably 0 mass% or more and 0.10 mass% or less, particularly preferably 0 mass% or more and 0.05 mass% or less, and most preferably 0 mass% or more and 0.04 mass% or less.

### · Mn

0.3 mass% or more and 1.8 mass% or less of Mn is contained in the fin(s) as an essential component. A portion of the Mn forms Al-Mn-Si-based intermetallic compounds in the fin(s) and has the function of increasing the strength of the fin(s) by dispersion strengthening. In addition, the balance of the Mn dissolves in the Al matrix and has the function of increasing the strength of the fin(s) by solid solution strengthening.

By setting the Mn content in the fin(s) to 0.3 mass% or more, the strength of the fin(s) can be increased by dispersion strengthening and solid solution strengthening. In addition, by setting the Mn content in the fin(s) to 0.3 mass% or more, growth of crystal grains in the fin(s) during brazing heating is promoted, and the occurrence of deformation and buckling of the fin(s) during brazing heating can be curtailed. With a view to further enhancing the effect of increasing the strength of the fin(s) due to Mn and curtailing deformation during brazing heating, the Mn content is preferably 0.5 mass% or more, more preferably 0.7 mass% or more, and further preferably 0.9 mass% or more. If the Mn content is less than 0.3 mass%, the aforementioned effect will decrease, and there is a risk that deformation or buckling of the fin(s) will more readily occur during brazing heating.

On the other hand, if the Mn content is excessively great, coarse intermetallic compounds will form more readily in the fin manufacturing process. If rolling is performed with these coarse intermetallic compounds included, there is a risk that pinholes will more readily occur. In addition, if the Mn content is excessively great, intermetallic compounds containing Mn and Si are more readily formed, and the amount of Si that can contribute to the formation of the melt is more likely to be insufficient. As a result, there is a risk of this leading to decreased brazeability. With a view to easily avoiding these problems, the Mn content is 1.8 mass% or less. With a view to the same, the Mn content is more preferably 1.7 mass% or less, further preferably 1.6 mass% or less, and particularly preferably 1.5 mass% or less.

In establishing the preferred range for the Mn content in the fin(s), the aforementioned upper and lower limits for the Mn content can be arbitrarily combined. For example, the preferred range for Mn content in the fin(s) may be 0.5 mass% or more and 1.7 mass% or less, 0.7 mass% or more and 1.6 mass% or less, or 0.9 mass% or more and 1.5 mass% or less.

### · Zn

0.3 mass% or more and 5.0 mass% or less of Zn is contained in the fin(s) as an essential component. Zn in the fin(s) has the function of increasing the amount of melt generated from the fin(s) and lowering the natural electrode potential of the fin(s). By setting the Zn content in the fin(s) to 0.3 mass% or more, preferably 0.5 mass% or more, more preferably 0.7 mass% or more, and further preferably 0.9 mass% or more, and particularly preferably 1.0 mass% or more, the natural electrode potential Ef of the fin(s) can easily be adjusted to a range that satisfies the aforementioned conditions. If the Zn content in the fin(s) is less than 0.3 mass%, there is a risk that the natural electrode potential Ef of the fin(s) will be raised excessively, leading to a decrease in the sacrificial anticorrosion effect.

On the other hand, if the Zn content in the fin(s) is excessively great, there is a risk that the natural electrode potential Ef of the fin(s) will be excessively lowered, leading to a decrease in the self corrosion resistance of the fin(s). In addition, if the Zn content in the fin(s) is excessively great, cracks more readily occur during the fin manufacturing process, and there is a risk that this will lead to a decrease in productivity. By setting the Zn content in the fin(s) to 5.0 mass% or less, preferably 3.5 mass% or less, more preferably 3.0 mass% or less, further preferably 2.5 mass% or less, particularly preferably 2.0 mass% or less, and most preferably 1.5 mass% or less, these problems can easily be avoided.

In establishing the preferred range for the Zn content in the fin(s), the aforementioned upper and lower limits for the Zn content can be arbitrarily combined. For example, the preferred range for Zn content in the fin(s) may be 0.5 mass% or more and 3.5 mass% or less, 0.5 mass% or more and 3.0 mass% or less, 0.7 mass% or more and 2.5 mass% or less, 0.9 mass% or more and 2.0 mass% or less, 0.9 mass% or more and 1.5 mass% or less, or 1.0 mass% or more and 1.5 mass% or less.

In addition to the aforementioned essential components and Al, elements such as Zr (zirconium), Cr (chromium), Ti (titanium), V (vanadium), Ni (nickel), Mg (magnesium), In (indium), and Sn (tin), may be contained in the fin(s) as optional components.

### · Zr, Cr, Ti, V

The fin(s) may contain, as (an) optional component(s), one or two or more elements selected from the group consisting of Zr: more than 0 mass% and 0.3 mass% or less, Cr: more than 0 mass% and 0.3 mass% or less, Ti: more than 0 mass% and 0.3 mass% or less, and V: more than 0 mass% and 0.3 mass% or less. These elements have the function of promoting the growth of crystal grains in the fin(s) during the brazing heating. Therefore, by setting the content of Zr, the content of Cr, the content of Ti, and the content of V in the fin(s) within each of the aforementioned specific ranges, the occurrence of deformation and buckling of the fin(s) during the brazing heating can be more effectively curtailed.

### · Ni

The fin(s) may contain more than 0 mass% and 0.8 mass% or less of Ni as an optional component. Ni forms intermetallic compounds in the fin(s) and has the function of increasing the strength of the fin(s) after brazing by dispersion strengthening. On the other hand, if the Ni content is excessively great, there is a risk of leading to a decrease in the self corrosion resistance of the fin(s). By setting the Ni content in the fin(s) to more than 0 mass% and 0.8 mass% or less, the strength of the fin(s) can be further increased while easily avoiding the aforementioned problems.

### · Mg

The fin(s) may contain more than 0 mass% and 0.1 mass% or less of Mg as an optional component. Mg has the function of forming Mg₂Si in the fin(s) after brazing and increasing the strength of the fin(s) by age-hardening. On the other hand, if the Mg content is excessively great, in situations in which brazing is performed using a flux, there is a risk that Mg will react with the flux and lead to decreases in brazeability. By setting the Mg content to more than 0 mass% and 0.1 mass% or less, the strength of the fin(s) can be further increased while easily avoiding such problems.

### · In, Sn

The fin(s) may contain, as (an) optional component(s), one or two elements selected from the group consisting of In: more than 0 mass% and 0.03 mass% or less and Sn: more than 0 mass% and 0.1 mass% or less. Sn and In have the function of lowering the potential of the fin(s) in the same manner as Zn. By setting the Sn content and the In content in the fin(s) within the aforementioned specific ranges, the potential of the fin(s) can be adjusted while avoiding decreases in the self corrosion resistance, and the corrosion resistance of the aluminum structure can be further increased.

The fin(s) may contain one or two or more elements from among the aforementioned optional components. For example, the fin(s) may have a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, Zn: 0.3 mass% or more and 5.0 mass% or less, and Ti: more than 0 mass% and 0.30 mass% or less, the balance consisting of Al and unavoidable impurities.

In addition, the fin(s) may have a chemical composition comprising, for example, Si: 2.0 mass% or more and 3.0 mass% or less, Fe: 0.05 mass% or more and 0.6 mass% or less, Cu: 0 mass% or more and 0.05 mass% or less, Mn: 0.3 mass% or more and 1.8 mass% or less, Zn: 0.3 mass% or more and 5.0 mass% or less, and Ti: more than 0 mass% and 0.30 mass% or less, the balance consisting of Al and unavoidable impurities.

In addition, the fin(s) may have a chemical composition comprising, for example, Si: 2.0 mass% or more and 3.0 mass% or less, Fe: 0.05 mass% or more and 0.6 mass% or less, Cu: 0 mass% or more and 0.04 mass% or less, Mn: 0.3 mass% or more and 1.8 mass% or less, Zn: 0.3 mass% or more and 5.0 mass% or less, and Ti: more than 0 mass% and 0.30 mass% or less, the balance consisting of Al and unavoidable impurities.

In addition, the fin(s) may have a chemical composition comprising, for example, Si: 2.2 mass% or more and 2.7 mass% or less, Fe: 0.13 mass% or more and 0.6 mass% or less, Cu: 0 mass% or more and 0.04 mass% or less, Mn: 0.7 mass% or more and 1.6 mass% or less, Zn: 0.9 mass% or more and 2.0 mass% or less, and Ti: more than 0 mass% and 0.30 mass% or less, the balance consisting of Al and unavoidable impurities.

### · Other Elements

Elements other than the aforementioned essential components and optional components may be contained in the fin(s), within ranges in which the aforementioned effects are not impaired. Examples of elements that can be contained in the fin(s) include Sr, Na, and rare earth elements. In terms of these elements, if the content of each of the individual elements is 0.05 mass% or less and the total content is 0.15 mass% or less, the aforementioned functions and effects are not influenced and these can be treated as unavoidable impurities.

### · Method for Manufacturing the Fin(s)

The method for manufacturing the fin(s) may take various forms. For example, the fin(s) may be an elongated material that has been subjected to elongation work or a forged material that has been subjected to forging work. In addition, the fin(s) may be a cast product obtained by casting.

With a view to increasing brazeability and strength, the fin(s) is (are) preferably an elongated material. Since the degree of processing in manufacturing processes for elongated materials is greater than in the case of forged materials and cast products, second-phase particles are readily fragmented in the manufacturing process. Therefore, a fin that is made from an elongated material can have a greater number of Si particles, Si-based intermetallic compounds, Al-based intermetallic compounds, and the like dispersed in the Al matrix. As a result, brazeability and strength can be increased in a balanced manner.

When producing the fin(s) made from an elongated material, for example, a continuous casting method such as twin-roll continuous casting and rolling or twin-belt continuous casting can be employed. Continuous casting makes it possible to increase the cooling rate when casting, as compared to DC casting. As a result, a large number of second-phase particles, such as fine Si particles, can be formed in the fin(s). Furthermore, by dispersing the large number of fine second-phase particles in the fin(s), the amount of melt formed during the brazing heating can be increased, and brazeability can be improved.

In cases in which the fin(s) is (are) produced by twin-roll continuous casting and rolling, the casting speed is preferably 0.5 m/min or more and 3 m/min or less. By setting the casting speed to 0.5 m/min or more in twin-roll continuous casting and rolling, the cooling rate when casting can be made sufficiently high, such that the second-phase particles in the fin(s) can easily be made finer. In addition, by setting the casting speed to 3 m/min or less, the molten metal can be sufficiently cooled and solidified during casting.

In addition, the temperature of the molten metal when casting is preferably 650°C or higher and 800°C or lower, and more preferably 680°C or higher and 750°C or lower. By setting the temperature of the molten metal to, preferably, 650°C or higher and, more preferably, 680°C or higher, the formation of large crystallized products in the melt can be avoided. In addition, by setting the temperature of the molten metal to, preferably, 800°C or lower and, more preferably, 750°C or lower, the molten metal can be sufficiently cooled and solidified during casting.

The thickness of the rolled sheet obtained by continuous casting is preferably 2 mm or more and 10 mm or less, and more preferably 4 mm or more and 8 mm or less. By setting the thickness of the rolled sheet to, preferably, 2 mm or more and, more preferably, 4 mm or more, robust rolled sheets can be consistently manufactured. In addition, by setting the thickness of the rolled sheet to, preferably, 10 mm or less and, more preferably, 8 mm or less, the rolled sheet after casting can be easily wound in a roll.

The rolled sheet obtained by continuous casting may be used for the fin(s) directly. In addition, by adjusting the thickness and temper of the fin(s) by subjecting the rolled sheet to cold rolling, heat treatment, or the like, (a) fin(s) having the desired thickness and temper can be obtained. The fin(s) may have a temper, for example, as indicated by the temper designation O, H1n, or H2n. With a view to curtailing erosion when brazing, the fin(s) preferably has (have) a temper as indicated by the temper designation H1n or H2n.

In addition, the fin(s) made from the elongated material may be produced, for example, by a method in which an ingot is produced by DC casting and then the ingot is subjected to elongation work. When producing an ingot by DC casting, the casting speed is preferably 20 mm/min or more and 100 mm/min or less, and more preferably 30 mm/min or more and 80 mm/min or less. By setting the casting speed in the DC casting to, preferably, 20 mm/min or more and, more preferably, 30 mm/min or more, the cooling rate when casting can be made sufficiently high, such that the second-phase particles in the fin(s) can easily be made finer. In addition, by setting the casting speed to, preferably, 100 mm/min or less and, more preferably, 80 mm/min or less, the molten metal can be sufficiently cooled and solidified during casting.

When a slab is produced by DC casting, the thickness of the slab is preferably 600 mm or less, and more preferably 500 mm or less. In this case, the cooling rate when casting can be made sufficiently high, such that the second-phase particles in the fin(s) can easily be made finer.

A fin having a desired shape can be obtained by producing an ingot by DC casting, and then performing elongation work on the ingot. For example, the fin(s) made from a rolled sheet having the desired thickness can be obtained by producing a slab by DC casting and performing rolling work on the slab. For rolling work, hot rolling and cold rolling may be performed in combination, as appropriate. In addition, the temper of the fin(s) can be adjusted by performing a heat treatment, such as a homogenizing treatment or an annealing treatment, as needed, in the period from before the rolling work is performed to after the rolling work has been completed. The fin(s) may have a temper, for example, as indicated by the temper designation O, H1n, or H2n. With a view to curtailing erosion when brazing, the fin(s) preferably has (have) a temper as indicated by the temper designation H1n or H2n.

In addition, a fin(s) made from an extruded material having a desired cross-sectional shape can be obtained by producing a billet with DC casting and performing hot extrusion work on the billet. Before hot extrusion work is performed, a homogenizing treatment may be performed on the billet, as needed. The casting of the billet is performed by a casting method such as hot-top casting or GDC casting.

In the aforementioned manufacturing method, the casting materials used when casting may be virgin aluminum, intermediate alloys, and aluminum scrap material. Aluminum scrap materials used as casting materials include, for example, discarded aluminum products, aluminum parts separated from discarded products, aluminum products, offcuts and cutting chips produced in aluminum product manufacturing processes, and the like. In cases in which aluminum scrap material is used as the casting material, the aluminum scrap material may be melted directly. In addition, the aluminum scrap material may be melted after the size of the aluminum scrap material has been adjusted by cutting or compressing the aluminum waste material. Furthermore, once a recycled aluminum base metal has been produced from aluminum scrap material, the recycled aluminum base metal may then be used as a casting material.

### Tube(s)

The tube(s) in the heat exchanger core is (are) composed of an aluminum alloy extruded material comprising Cu: more than 0.05 mass% and 0.6 mass% or less.

Tubing, which has a flat cross-sectional shape, such as a flat tube or a flat multi-port tube, can be used for the tube(s) in the heat exchanger core. More specifically, the tube(s) may be configured to have a pair of flat walls, which are disposed spaced apart from each other and facing each other, and connecting walls, which connect the two ends, in the width direction, of the flat walls, to each other, such that a heat transfer medium can be circulated in a heat transfer medium flow path, which is surrounded by the flat walls and the connecting walls. In addition, the tube(s) may further have (a) partition wall(s) that divide(s) the interior space surrounded by the flat walls and the connecting walls into a plurality of heat transfer medium flow paths. In the heat exchanger core, the flat walls of the tube(s) and the fin(s) are joined via the brazed joint(s).

The cross-sectional shape in the cross-section perpendicular to the longitudinal direction of the tube(s) is not particularly limited, and this may take various forms, such as a rectangular shape or an elliptical shape. In addition, the cross-sectional shape of the heat transfer medium flow path(s) is not particularly limited, and this may take various forms, such as a circular shape or an elliptical shape, an elliptical shape, a triangular shape, or a rectangular shape.

The chemical composition of the aluminum alloy extruded material that constitutes the tube(s) may be such that the Cu content is within the aforementioned specific range. For example, the aluminum alloy extruded material that constitutes the tube(s) may have a chemical composition comprising Cu: more than 0.05 mass% and 0.6 mass% or less, the balance consisting of Al and unavoidable impurities. The Cu in the tube(s) has the function of increasing the strength of the tubes. Meanwhile, the Cu in the tube(s) diffuses from the tube(s) into the sprayed Zn coating and the brazed joint(s) when brazing, and has the function of raising the natural electrode potential of these portions; therefore if the Cu content in the tube(s) is excessively great, there is a risk that the balance of the natural electrode potentials in each of the portions of the heat exchanger core will be impaired, leading to a decrease in corrosion resistance. Thus, by setting the Cu content in the tube(s) within the aforementioned specific range, the strength of the tube(s) can be increased while ensuring excellent corrosion resistance of the heat exchanger core.

Furthermore, in addition to Cu as an essential component, the tube(s) may contain one or two or more elements as optional components. For example, the aluminum alloy extruded material constituting the tube(s) may have a chemical composition comprising Cu: more than 0.05 mass% and 0.6 mass% or less, and further comprising, as (an) optional component(s), one or two or more elements selected from the group consisting of Si: 0.7 mass% or less, Fe: 0.5 mass% or less, Mn: 1.2 mass% or less, and Ti: 0.3 mass% or less, the balance consisting of Al and unavoidable impurities. In addition, the aluminum alloy extruded material constituting the tube(s) may have a chemical composition comprising Cu: more than 0.05 mass% and 0.6 mass% or less, and further comprising, as the optional component(s), one or two or more elements selected from the group consisting of Si: 0.05 mass% or more and 0.7 mass% or less, Fe: 0.05 mass% or more and 0.5 mass% or less, Mn: 0.05 mass% or more and 1.2 mass% or less, and Ti: 0.01 mass% or more and 0.3 mass% or less, the balance consisting of Al and unavoidable impurities.

A sacrificial anode layer, which has a lower natural electrode potential than the inner surface of the tube(s) is formed on the outer surface of the tube(s). The sacrificial anode layer may be, for example, a sprayed Zn coating. A Zn coating serving as a sacrificial anode layer is formed, for example, by a portion of the sprayed Zn coating, which was provided on the outer surface of the tube(s) before brazing, remaining after brazing.

In addition, the sacrificial anode layer may be, for example, a Zn-enriched layer with a higher concentration of Zn than the surroundings. A Zn-enriched layer serving as a sacrificial anode layer is formed, for example, by diffusion of Zn atoms contained in zinc vapor or in a sprayed Zn coating, from the outer surface of the tubes toward the interior during brazing. Note that, when the sacrificial anode layer is a Zn-enriched layer, the boundary between the Zn-enriched layer and the layer adjacent to the Zn-enriched layer in the tube(s) may not always be clear. Even in such a case, the aforementioned effects can be obtained if the natural electrode potential Ets at the surface of the Zn-enriched layer that serves as the sacrificial anode layer satisfies the aforementioned conditions.

### Natural Electrode Potential

The heat exchanger core satisfies all four of the conditions of: (1) the natural electrode potential of the inner surface of the tube(s), when the natural electrode potential of the sacrificial anode layer is used as the reference, is +50 mV or more; (2) the natural electrode potential of the sacrificial anode layer, when the natural electrode potential of fillets in the brazed joints is used as the reference, is +100 mV or less; (3) the natural electrode potential of the sacrificial anode layer, when the natural electrode potential of the fin(s) is used as the reference, is -80 mV or more and +150 mV or less; and (4) the natural electrode potential of the fin(s) is lower than the natural electrode potential of the fillets, or the natural electrode potential of the fin(s) is greater than or equal to the natural electrode potential of the fillets and the absolute value of the potential difference between the natural electrode potential of the fin(s) and the average of the natural electrode potential of the fin(s), the natural electrode potential of the fillets, and the natural electrode potential of the sacrificial anode layer is 40 mV or less.

In other words, the natural electrode potential Ets of the sacrificial anode layer, the natural electrode potential Eti of the inner surface of the tube(s), the natural electrode potential Ej of the fillet(s) in the brazed joint(s), and the natural electrode potential Ef of the fin(s) all satisfy the following four conditions.
(1) The potential difference Eti - Ets between the natural electrode potential Eti of the inner surface of the tube(s) and the natural electrode potential Ets of the sacrificial anode layer is 50 mV or more.
(2) The potential difference Ets - Ej between the natural electrode potential Ets of the sacrificial anode layer and the natural electrode potential Ej of the fillet(s) is 100 mV or less.
(3) The potential difference Ets - Ef between the natural electrode potential Ets of the sacrificial anode layer and the natural electrode potential Ef of the fin(s) is -80 mV or more and 150 mV or less.
(4) The natural electrode potential Ef of the fin(s) is lower than the natural electrode potential Ej of the fillets, or the natural electrode potential Ef of the fin(s) is greater than or equal to the natural electrode potential Ej of the fillets, and the absolute value of the potential difference Eav - Ef between the natural electrode potential Ef of the fin(s) and the average Eav of the natural electrode potential Ef of the fin(s), the natural electrode potential Ej of the fillets, and the natural electrode potential Ets of the sacrificial anode layer, is 40 mV or less. Note that, the average Eav of the natural electrode potentials of the fin(s), the fillets, and the sacrificial anode layer is the arithmetic mean value of the natural electrode potential Ef of the fin(s), the natural electrode potential Ej of the fillets, and the natural electrode potential Ets of the sacrificial anode layer (which is to say, (Ef + Ej + Ets)/3).

Such a natural electrode potential relationship is difficult to realize with conventional heat exchanger cores obtained, for example, using a fin made from a brazing sheet or a single layer aluminum material that does not have the ability to form a brazed joint. A heat exchanger core that satisfies all of the aforementioned four conditions can only be realized by brazing in the presence of zinc vapor when brazing, in addition to having caused the chemical compositions of the aluminum alloys constituting the fin(s) and the tube(s) to be within the specific ranges indicated in the aforementioned manufacturing method.

With respect to the aforementioned condition (1), by setting the natural electrode potential Eti of the inner surface of the tube(s) to a potential that is 50 mV or more higher (which is to say, more noble) than the natural electrode potential Ets of the sacrificial anode layer, the sacrificial anode layer is caused to function as a sacrificial anode with respect to the inner surface of the tube(s), such that corrosion of the interior of the tube(s) can be curtailed. If the potential difference Eti - Ets between the inner surface of the tube(s) and the sacrificial anode layer is less than 50 mV, the sacrificial anticorrosion effect due to the sacrificial anode layer will be insufficient, and the interior of the tube(s) will susceptible to corrosion. As a result, there is a risk that leakage of the heat transfer medium from the tube(s) will tend to occur early.

The aforementioned condition (2) stipulates the potential difference Ets - Ej between the natural electrode potential Ets of the sacrificial anode layer and the natural electrode potential Ej of the fillet(s) in the brazed joint(s). By setting the potential difference Ets - Ej between the sacrificial anode layer and the fillet(s) to 100 mV or less, the potential balance between the sacrificial anode layer and the brazed joint(s) will be within the optimal range, and an early loss of the brazed joint(s) can easily be avoided. As a result, a fin(s) falling off from the heat exchanger core can be curtailed. If the potential difference Ets - Ej between the sacrificial anode layer and the fillet(s) exceeds 100 mV, the brazed joint(s) will corrode more readily than other regions in the heat exchanger core, and there is a risk that the brazed joint(s) will be lost early. As a result, there is a risk that the fin(s) will tend to fall off from the heat exchanger core early.

The aforementioned condition (3) stipulates the potential difference Ets - Ef between the natural electrode potential Ets of the sacrificial anode layer and the natural electrode potential Ef of the fin(s). By setting the potential difference Ets - Ef between the sacrificial anode layer and the fin(s) within the aforementioned specific range, both the fin(s) and the sacrificial anode layer can be made to function as sacrificial anodes for the tube(s). If the potential difference Ets - Ef between the sacrificial anode layer and the fin(s) is less than -80 mV, the sacrificial anode layer will be susceptible to corrosion earlier than the fin(s). As a result, there is a risk that this may lead to early loss of the sacrificial anode layer, and corrosion of the tube(s) may proceed starting from the corrosion of the sacrificial anode layer. On the other hand, if the potential difference Ets - Ef between the sacrificial anode layer and the fin(s) exceeds 150 mV, there is a risk that the fin(s) will be susceptible to corrosion earlier than the sacrificial anode layer, which may lead to early loss of the fin(s).

In order to satisfy the aforementioned condition (4), any one from among the following conditions may be satisfied: (4-1) the natural electrode potential Ef of the fin(s) is lower than the natural electrode potential Ej of the fillet(s) in the brazed joint(s) (which is to say the natural electrode potential Ef of the fin(s) is lower than the natural electrode potential Ej of the fillet(s)), and (4-2) the natural electrode potential Ef of the fin(s) is equal to or greater than the natural electrode potential Ej of the fillet(s), and the potential difference Eav - Ef between the natural electrode potential Ef of the fin(s) and the average Eav is -40 mV or more and 40 mV or less.

Owing to the natural electrode potential of each of the portions of the heat exchanger core further satisfying the aforementioned conditions (4), in addition to the aforementioned conditions (1) to (3), early loss of the fin(s) can be easily avoided and the sacrificial anticorrosion effect can be exhibited over a long period of time.

As described above, the balance between the natural electrode potentials of each region in the heat exchanger core can be adjusted within the optimal range by the natural electrode potentials in each region in the heat exchanger core satisfying all of the aforementioned four conditions. As a result, corrosion of any region from among the sacrificial anode layer, the fin(s), and the brazed joint(s), earlier than other regions, can be easily avoided, and the corrosion resistance of the overall heat exchanger core can be increased. With a view to obtaining such an effect more reliably, the heat exchanger core preferably satisfies the four conditions of the conditions (1) to (3) and the condition (4-1). With a view to the same, the natural electrode potential of the fin(s), when the natural electrode potential of the fillets is used as the reference, is preferably -5 mV or less, more preferably -10 mV or less, and further preferably -15 mV or less. That is to say, the potential difference Ef - Ej between the natural electrode potential Ef of the fin(s) and the natural electrode potential Ej of the fillets is preferably -5 mV or less, more preferably -10 mV or less, and further preferably -15 mV or less.

### Method for Manufacturing the Heat Exchanger Core

The heat exchanger core can be obtained by assembling an assembly by alternately overlaying the fin(s), which has (have) a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and Zn: 1.8 mass% or less, and 0.3 mass% or more and 4.0 mass% or less, the balance consisting of Al and unavoidable impurities, and the tube(s) made from an aluminum alloy extruded material containing Cu: more than 0.05 mass% and 0.6 mass% or less,
by heating the assembly and performing brazing of the assembly in an atmosphere containing zinc vapor, a brazed joint(s) form(s) between the fin(s) and the tube(s), and the sacrificial anode layer forms on the outer surface of the tube(s).

The chemical composition of the fin(s) used to produce the heat exchanger core is the same as the chemical composition of the fin(s) in the heat exchanger core after brazing. Accordingly, in terms of the types of elements contained in the fin(s) before brazing, the contents thereof, and the effects thereof, the aforementioned description of the fin(s) in the heat exchanger core after brazing can be referred to, as appropriate.

In addition, the constitution of the tube(s) used to produce the heat exchanger core is also the same as the constitution of the tube(s) in the heat exchanger core after brazing, except that no sacrificial anode layer is formed on the outer surface. Accordingly, in terms of the types of elements contained in the tube(s) before brazing, the contents thereof, and the effects thereof, the aforementioned description of the tube(s) in the heat exchanger core after brazing can be referred to, as appropriate.

In the method for manufacturing the heat exchanger core, the assembly is assembled by alternately overlaying the tube(s) and fin(s), and then the assembly is brazed by heating in an atmosphere containing zinc vapor. More specifically, the atmosphere when brazing may, for example, be a non-oxidizing gas atmosphere containing zinc vapor. Nitrogen, argon, and the like can be used as the non-oxidizing gas, for example. In addition, the atmosphere when brazing may be a reduced pressure atmosphere containing zinc vapor.

The heating temperature when brazing the assembly is preferably set so that the liquid phase ratio of the fin(s), which is to say the ratio of the mass of the melt generated from the fin(s) to the mass of the fin(s) before brazing, is more than 5 mass% and 35 mass% or less, and more preferably set so that the ratio is 7 mass% or more and 25 mass% or less. By setting the liquid phase ratio of the fin(s) during the heating within the aforementioned specific range, a sufficient amount of melt can be generated from the fin(s) and the brazed joint(s) can be easily formed with the tube(s), while curtailing decreases in the strength of the fin(s) during heating.

In addition, the hold time at the heating temperature when brazing the assembly is preferably set so that the time for which the liquid phase ratio of the fin(s) is 5 mass% or more is 30 seconds or more and 3600 seconds or less, and more preferably set so that the time is 60 seconds or more and 1800 seconds or less. By setting the hold time when brazing within the aforementioned specific range, the melt generated from the fin(s) can sufficiently fill between the fin(s) and the tube(s), while curtailing decreases in the strength of the fin(s) during heating. Note that, in the joint(s) between the fin(s) and the tube(s), melt is generated from the entire surface of the fin(s), and thus the length of the hold time can be set independently of the area of the brazed joint(s) formed between the fin(s) and the tube(s).

More specifically, for example, the heating temperature in the brazing can be set as appropriate within the range of 580°C or higher and 620°C or lower. In addition, the hold time at the heating temperature can be set as appropriate within the range of, for example, 0 minutes or more and 10 minutes or less, preferably 30 seconds or more and 5 minutes or less. Here, the hold time refers to the elapsed time from the point in time when the heating temperature has reached the desired temperature. If the hold time at the heating temperature is 0 minutes, the heating may be terminated and cooling of the heat exchanger core may be started, immediately after the heating temperature has reached the desired temperature.

The liquid phase ratio of the aforementioned fin(s) can be determined based on the lever rule, based on an equilibrium state diagram at the desired temperature. A known equilibrium state diagram may be used as the equilibrium state diagram used for calculating the liquid phase ratio, or an equilibrium state diagram created by software for calculating equilibrium state diagrams may be used. For example, the thermodynamic calculation system "Thermo-Calc (registered trademark)" made by Thermo-Calc Software AB or the like can be used as this type of software.

In addition, prior to brazing, a flux may be disposed, in advance, at the portion(s) of the assembly where the brazed joint(s) are to be formed, followed by heating the assembly to perform brazing. For example, fluoride-based fluxes such as KAlF₄, K₂AlF₅, K₂AlF₅·H₂O, K₃AlF₆, AlF₃, KZnF₃, and K₂SiF₆, and compounds used as fluxes for brazing aluminum such as cesium-based fluxes such as Cs₃AlF₆, CsAlF₄·2H₂O, Cs₂AlF₅·H₂O, and chloride-based fluxes can be used as the flux.

In the manufacturing method described above, a small amount of melt is generated from the fin(s) when the assembly is heated. Owing to this melt collecting at the contacting parts of the fin(s) and the tube(s) due to surface tension, (a) brazed joint(s) having (a) fillet(s) is (are) formed between the fin(s) and the tube(s).

In addition, in the manufacturing method described above, brazing is performed in an atmosphere containing zinc vapor. By brazing in the presence of zinc vapor in this manner, a sacrificial anode layer can be formed on the surface of the tube(s). In addition, the Zn atoms in the zinc vapor can easily dissolve into the melt generated from the fin(s) during the formation process of the brazed joint(s). Therefore, by dissolving Zn atoms in the melt that has collected at the contacting parts between the fin(s) and the tube(s), the natural electrode potential of the brazed joint(s) can be appropriately lowered. In addition, because the amount of melt generated from the fin(s) is very small, melt present at locations distant from the contacting parts between the fin(s) and the tube(s) is not drawn to the contacting parts between the fin(s) and the tube(s), but rather stays on the fin(s). Therefore, the Zn atoms dissolved in the fin melt can easily diffuse to the interior of the fin(s), and the natural electrode potential of the fin(s) can be appropriately lowered.

As described above, by using (a) fin(s) made from an aluminum alloy having the aforementioned specific chemical composition and capable of forming a brazed joint in a single layer, and performing brazing in an atmosphere containing zinc vapor, the natural electrode potential of the fin(s) and the brazed joint(s) can be appropriately lowered, and a sacrificial anode layer can be easily formed on the outer surface of the tube(s). As a result, the heat exchanger core can be obtained more easily.

In the manufacturing method described above, the method of generating zinc vapor when brazing is not particularly limited and may take various forms. For example, in the manufacturing method described above, a method can be employed in which zinc is disposed in the heating furnace that is used for brazing, and zinc vapor is generated from the zinc in the heating furnace by heating when brazing. In addition, as will be described below, a method of forming a sprayed Zn coating on the outer surface of the tube(s) before brazing and generating zinc vapor from the sprayed Zn coating when brazing can also be employed.

A sprayed Zn coating is preferably provided on the outer surface of the tube(s) used to produce the heat exchanger core. After having assembled the assembly using the tube(s), which was (were) provided with a sprayed Zn coating on the outer surface, brazing is performed whereby the Zn atoms in the sprayed Zn coating are diffused into the tube(s) and more readily form a sacrificial anode layer on the outer surface of the tube(s). Furthermore, the sprayed Zn coating can be caused to generate zinc vapor by being heated when brazing. By contacting this zinc vapor with the fin(s) and brazed joint(s), the natural electrode potential of the fin(s) and brazed joint(s) can be lowered. As a result of the foregoing, the natural electrode potential of each region in the heat exchanger core after brazing can be more easily adjusted within the aforementioned specific ranges.

The amount of Zn deposited in the sprayed Zn coating provided on the outer surface of the tube(s) is not particularly limited but can be set as appropriate within a range of, for example, 3 g/m² or more and 9 g/m² or less.

In the manufacturing method described above, the Zn content in the fin(s) after brazing is preferably 0.1 mass% or more higher than the Zn content in the fin(s) before brazing. In this case, the natural electrode potential of each region in the heat exchanger core after brazing can be more easily adjusted within the aforementioned specific ranges.

Note that, the difference between the content of Zn in the fin(s) after brazing and the content of Zn in the fin(s) before brazing can be adjusted, for example, by way of the concentration of zinc vapor in the atmosphere when brazing. For example, if the content of Zn in the fin(s) after brazing is to be increased, the concentration of zinc vapor in the atmosphere when brazing may be increased. In addition, the concentration of zinc vapor in the atmosphere when brazing can be easily adjusted, for example, by way of the total amount of zinc disposed in the heating furnace. For example, if the concentration of zinc vapor in the atmosphere when brazing is to be increased, the amount of zinc disposed in the heating furnace and/or the amount of the sprayed Zn coating provided on the outer surface of the tube(s) may be increased.

### Exemplary Embodiment

### Exemplary Embodiment

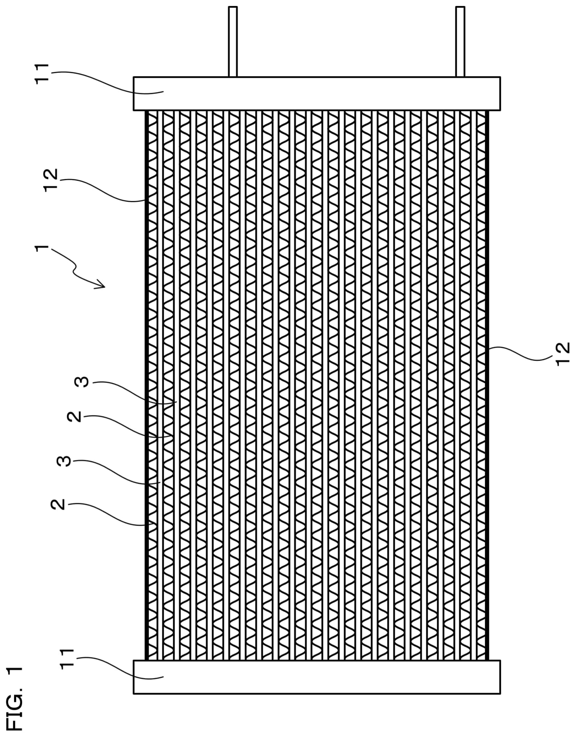

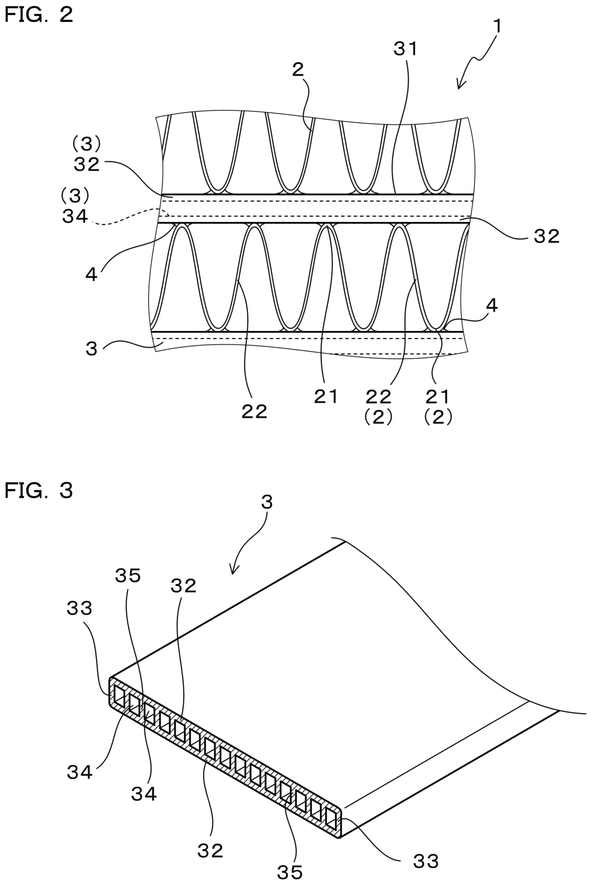

An exemplary embodiment of the heat exchanger core and the manufacturing method thereof is described with reference to FIG. 1 to FIG. 3. As shown in FIG. 1 and FIG. 2, the heat exchanger core 1 of the present example has fins 2, tubes 3, and brazed joints 4, which join the fins 2 and the tubes 3. The fins 2 are composed of an aluminum alloy, which has a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 5.0 mass% or less, the balance consisting of Al and unavoidable impurities.

The tubes 3 are composed of an aluminum alloy extruded material containing Cu: more than 0.05 mass% and 0.6 mass% or less. As shown in FIG. 2, a sacrificial anode layer 31 having a lower natural electrode potential than the inner surface of the tubes 3 is formed on the outer surface of the tubes 3. In addition, the heat exchanger core 1 satisfies four conditions: (1) the natural electrode potential of the inner surface of the tubes 3, when the natural electrode potential of the sacrificial anode layer 31 is used as the reference, is +50 mV or more; (2) the natural electrode potential of the sacrificial anode layer 31, when the natural electrode potential of fillets in the brazed joints 4 is used as the reference, is +100 mV or less; (3) the natural electrode potential of the sacrificial anode layer 31, when the natural electrode potential of the fins 2 is used as the reference, is -80 mV or more and +150 mV or less; and (4) the natural electrode potential of the fins 2 is lower than the natural electrode potential of the fillets, or the natural electrode potential of the fins 2 is greater than or equal to the natural electrode potential of the fillets and the absolute value of the potential difference between the natural electrode potential of the fins and the average of the natural electrode potential of the fins 2, the natural electrode potential of the fillets, and the natural electrode potential of the sacrificial anode layer 31 is 40 mV or less.

The heat exchanger core 1 of the present example has a plurality of fins 2 and a plurality of tubes 3, as shown in FIG. 1, and is configured as a core of a so-called parallel flow heat exchanger in which the fins 2 and the tubes 3 are alternately stacked. The fins 2 in the heat exchanger core 1 of the present example are given a corrugated shape by press working and, as shown in FIG. 2, are composed of a plurality of fin apexes 21 curved in a U shape, and intermediate fin parts 22, which connect the fin apexes 21 to each other. In addition, as shown in FIG. 3, the tubes 3 are composed of an extruded multi-port tube comprising: a pair of flat walls 32, which are disposed spaced apart from each other and facing each other; connecting walls 33, which connect the two ends in the width direction of the flat walls 32; and dividing walls 35, which divide the interior space surrounded by the flat walls 32 and the connecting walls 33 into a plurality of heat transfer medium flow paths 34. Furthermore, as shown in FIG. 2, the fin apexes 21 of the fins 2 and the flat walls 32 of the tubes 3 are joined via brazed joints 4.

As shown in FIG. 1, the heat exchanger core 1 of the present example may have header tanks 11 mounted at the two ends of the plurality of tubes 3 and side plates 12 joined to the outermost fins 2 from among the plurality of fins 2, in the stacking direction. The interior spaces of the header tanks 11 are configured to allow circulation of the heat transfer medium to the heat transfer medium flow paths 34 in the tubes 3. The header tanks 11 can distribute the heat transfer medium in the header tanks 11 to the plurality of tubes 3, or the heat transfer medium that has been led out from the tubes 3 can be merged in the header tanks 11.

Although not shown in the figures, the header tanks 11 and the tubes 3 are joined via brazed joints. The method of joining the header tank 11 and the tubes 3 is not particularly limited, and brazed joints can be formed by known methods. For example, a method can be employed in which the header tanks 11 before brazing are composed of a brazing sheet comprising a core material and a brazing material laminated on at least one side of the core material, and brazing joints 4 are formed by the brazing material of the header tanks 11. In addition, separate brazing material may be disposed between the header tanks 11 and the tubes 3 to form brazed joints using this brazing material.

In addition, the side plates 12 and the fins 2 are joined via brazed joints 4.

The method of manufacturing the heat exchanger core 1 of the present example is, for example, as follows. First, the fins 2, which have a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 4.0 mass% or less, the balance consisting of Al and unavoidable impurities, and tubes 3, which are made from an aluminum alloy extruded material containing Cu: more than 0.05 mass% and 0.6 mass% or less, are alternately overlayed to produce a stack. An assembly is obtained by mounting the header tanks 11 at the two ends of the tubes 3 in this stack, and contacting the side plates 12 with the fins 2 located outermost among the plurality of fins 2.

Next, the assembly is heated to perform brazing in an atmosphere containing zinc vapor. The heat exchanger core 1 shown in FIG. 1 can thereby be obtained.

Next, the functions and effects of the present example will be described. The fins 2 in the heat exchanger core 1 of the present example are composed of an aluminum alloy, which has the aforementioned specific chemical composition. With regard to the heat exchanger core 1, by at least using fins 2 that have the aforementioned specific chemical composition, a heat exchanger core 1 can be obtained in which the natural electrode potentials of each region satisfy all of the aforementioned four conditions . Furthermore, by setting the natural electrode potential of each region in the heat exchanger core 1 in the aforementioned manner, the corrosion resistance of the heat exchanger core 1 can be increased.

In addition, in the method for manufacturing the heat exchanger core 1, the fins 2 and tubes 3, which have the aforementioned specific chemical compositions, are combined to produce an assembly, and then brazing of the assembly is performed in an atmosphere containing zinc vapor. The zinc vapor in the brazing atmosphere can appropriately lower the natural electrode potentials of the fins 2 and the brazed joints 4. Furthermore, the zinc vapor in the brazing atmosphere can form a sacrificial anode layer 31 on the outer surface of the tubes 3. By adjusting the potential of each region in the heat exchanger core 1 by way of the zinc vapor, in this manner, it is easily possible to obtain a heat exchanger core 1 in which the natural electrode potential of each region satisfies all of the aforementioned four conditions.

### Experimental Example

The present example describes a case in which corrosion resistance is evaluated using a mini core test piece S1, which simulates the heat exchanger core 1. Note that, among the reference numerals used in the present example, reference numerals that are the same as the reference numerals used in the preceding exemplary embodiments indicate components and the like that are the same as the components in the preceding exemplary embodiments.

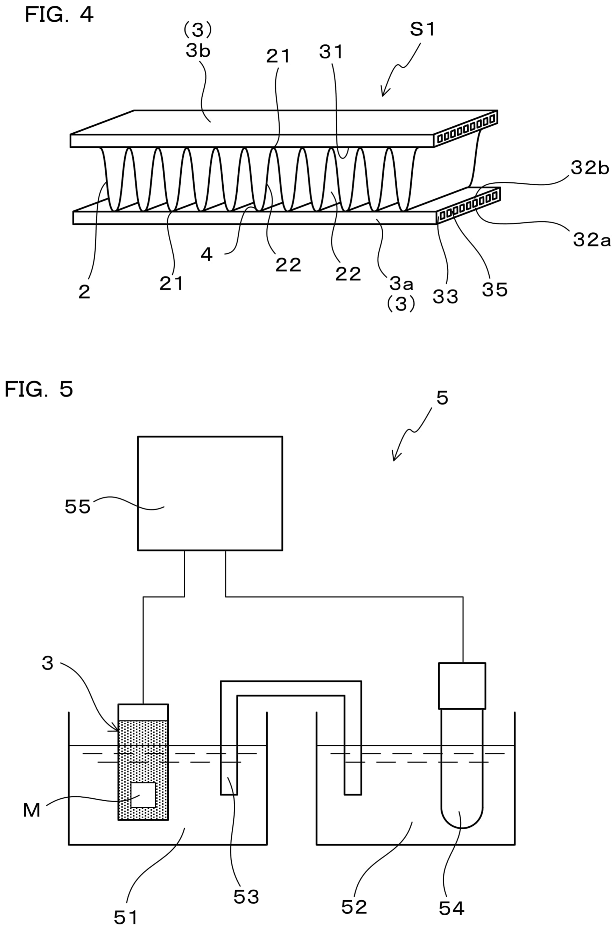

As shown in FIG. 4, the mini core test piece S1 has two tubes 3 (3a, 3b) disposed spaced apart from each other and a fin 2 interposed between the two tubes 3. In addition, the flat walls 32 of the tubes 3 contact the fin apexes 21 of the fin 2, and brazed joints 4 are formed between the tubes 3 and the fin 2.

Specifically, the tubes 3 used for producing the mini core test piece S1 are flat multi-port tubes composed of an aluminum alloy extruded material, which has the chemical composition shown in Table 1. Note that "Bal." in Table 1 is a symbol indicating the balance. The width of the tubes 3 is 14 mm, the length is 40 mm, and the thicknesses of the flat walls 32, the connecting walls 33, and the dividing walls 35 are all 0.35 mm. In addition, a sprayed Zn coating is formed on the outer surface of the tubes 3 in advance. The deposition amount of Zn atoms in the Zn thermal spray coating is approximately 8 g/m².

Specifically, the fin 2 used in producing the mini core test piece S1 is a corrugated fin having a single layer structure made from an aluminum alloy, which has the chemical composition shown in Table 1. In addition, the thickness of the fin 2 is 0.08 mm, the spacing of the fin apexes 21 is 3 mm, and the height of the fin 2 is 10 mm. Among the two tubes 3, the number of fin apexes 21 that contact the first tube 3a is 11 and the number of fin apexes 21 that contact the second tube 3b is 12.

In producing the mini core test piece S1, the tubes 3 and the fin 2 are first overlaid, and then flux is applied to the contacting parts between the tubes 3 and the fin 2 to produce the assembly. After 10 of these assemblies were placed into a heating furnace, zinc is disposed in the surroundings of the assemblies. Further, a cover is placed over the 10 assemblies and the zinc in order to retain the zinc vapor in the surroundings of the assemblies. The assemblies are then heated in an inert gas atmosphere and brazing of the assemblies is performed in the presence of the zinc vapor, while generating the zinc vapor from the zinc and the sprayed Zn coatings. The mini core test piece S1 can thereby be obtained.

The Zn content in the fin 2 of the mini core test piece S1 obtained in this manner is greater than the Zn content in the fin 2 before brazing, owing to contact with the zinc vapor when brazing. For example, in the mini core test piece S1 in the present example, the Zn content in the fin 2 after brazing can be brought to 1.75 mass%, which is 0.27 mass% higher than the Zn content in the fin 2 before brazing. Note that measurement of the Zn content in the fin 2 after brazing can be performed, for example, using an electron probe microanalyzer (which is to say, an EPMA). When the Zn content in the fin 2 is measured using an EPMA, specifically, a line analysis of the surface of the fin 2 is performed in the central part of the mini core test piece S1, and the average value of the resulting Zn concentration profile may be taken as the Zn content.

The natural electrode potential of each region in the mini core test piece S1 and the corrosion resistance are shown in Table 2. Note that the mini core test piece R1 shown in Table 2 is a test piece for comparison with the mini core test piece S1. The mini core test piece R1 has the same configuration as the mini core test piece S1, except that a double-sided brazing sheet in which brazing material is laminated on both sides of a core material is used for the fin 2. The chemical compositions of the core material and brazing material in the fin 2 of the mini core test piece R1 are as shown in Table 1. In addition, the thickness of the double-sided brazing sheet before brazing is 0.08 mm and the cladding ratio of the brazing material is 10% on each side. In addition, the method for producing the mini core test piece R1 is the same as the method for manufacturing the mini core test piece S1, except that a double-sided brazing sheet is used in place of the fin 2 that is made from a single layer aluminum alloy. Note that the Zn content in the fin after brazing of the mini core test piece R1 is 1.20 mass%, which is 0.28 mass% less than the Zn content in the core material of the fin before brazing.

The measurement methods for the natural electrode potentials and the evaluation methods for the corrosion resistance, which are shown in Table 2, are as follows.

### · Natural Electrode Potential Ets of the Sacrificial Anode Layer 31

The fins 2 are cut from the mini core test pieces S1 and R1 after brazing, and the first tube 3a is removed. A region of the sacrificial anode layer 31 of this tube 3a is specified between a brazed joint 4 at any one place and a brazed joint 4 adjacent to said brazed joint 4, and this region is used as a potential measurement region. That is to say, the potential measurement region is a region on the outer surface of the first tube 3a facing one pitch of fins.

After specifying the potential measurement region as described above, portions other than the potential measurement region are covered with a sealant. Thereafter, the natural electrode potential of the potential measurement region is measured as follows. A measurement device 5 shown in FIG. 5 is used for the measurement of the natural electrode potential. The measurement device 5 has a first container 51 containing a solution for immersing the tube 3, a second container 52 containing a solution for immersing a reference electrode 54, a salt bridge 53 for electrically connecting the solution in the first container 51 and the solution in the second container 52, and an electrometer 55 for measuring and recording the potential of the potential measurement region with respect to the reference electrode 54. Note that, in FIG. 5, the shape of the tube 3 is schematically illustrated.

The measurement of the natural electrode potential is performed as follows. First, a 5% aqueous solution of NaCl, the pH of which has been adjusted to 3 using acetic acid, is prepared in the first container 51, and a saturated aqueous solution of NaCl is prepared in the second container 52. The solution in the first container 51 and the solution in the second container 52 are then electrically connected via the salt bridge 53. Note that the temperature of each of the solutions is room temperature.

Next, the tube 3 and the reference electrode 54 are electrically connected to the electrometer 55. Note that a saturated calomel electrode (known as an SCE) can, for example, be used as the reference electrode 54.

In this state, by immersing the potential measurement region M of the tube 3 while stirring the solution in the first container 51 and immersing the reference electrode 54 in the saturated aqueous solution of NaCl in the second container 52, the natural electrode potential (unit: mV vs SCE) of the potential measurement region M of the tube 3, when the reference electrode 54 is used as the reference, can be measured. Then, the arithmetic mean of the natural electrode potential of the potential measurement region M from the time when 20 hours have elapsed since the start of the measurement to the time when 24 hours have elapsed is taken as the natural electrode potential Ets of the sacrificial anode layer 31.

### · Natural Electrode Potential Eti at the Inner Surface of the Tube 3

The fins 2 are cut from the mini core test pieces S1 and R1 after brazing, and the first tube 3a is removed. By surface grinding the flat wall 32a, the connecting walls 33, and the dividing walls 35, which are not joined to the fin apexes 21, from this tube 3a, the inner surface of the flat wall 32b (see Fig. 4), which is joined to the fin apexes 21, is exposed. A potential measurement region is established on this inner surface and portions other than the potential measurement region are covered with a sealant. Subsequently, the natural electrode potential of the potential measurement region is measured by a method similar to that for the natural electrode potential Ets of the sacrificial anode layer 31. The natural electrode potential obtained in this manner is taken as the natural electrode potential Eti of the inner surface of the tube 3.

### · Natural Electrode Potential Ef of the Fin 2

The first tube 3a and the fin apexes 21 joined to the first tube 3a are cut from the mini core test pieces S1 and R1 after brazing. Next, a potential measurement region is established on the surface of the fin 2 joined to the second tube 3b, and portions other than the potential measurement region are covered with a sealant. Subsequently, the natural electrode potential of the potential measurement region is measured by a method similar to that for the natural electrode potential Ets of the sacrificial anode layer 31. The natural electrode potential obtained in this manner is taken as the natural electrode potential Ef of the fin 2.

### · Natural Electrode Potential Ej of the Fillet

The fins 2 are cut from the mini core test pieces S1 and R1 after brazing, and the first tube 3a is removed. Next, both the fillets of the brazed joints 4 and the fin apexes 21 are exposed on a common plane, and the fin apexes 21 remaining on the first tube 3a are surface ground. Next, a potential measurement region is established on a fillet that has been exposed by surface grinding, and portions other than the potential measurement region are covered with a sealant. Subsequently, the natural electrode potential of the potential measurement region is measured by a method similar to that for the natural electrode potential Ets of the sacrificial anode layer 31. The natural electrode potential obtained in this manner is taken as the natural electrode potential Ej of the fillet.

### · Corrosion Resistance

In the mini core test pieces S1 and R1 obtained by the aforementioned methods, the end faces of the tubes 3, the connecting walls 33 of the tubes 3, and the flat walls 32a that are not joined to the fin 2 are covered with a sealant, and then a SWAAT test is carried out by a method compliant with ASTM-G85-A3. Note that the test period is either 20 days or 40 days. The mini core test pieces S1 and R1 after the end of the test are washed using acid, and then the corrosion resistance is evaluated based on whether or not there is penetration of the tubes 3 and whether or not there is separation of the fins 2 from the tubes 3.

The symbols shown in the "Fin Separation" column in Table 2 have the following meanings.
A: all of the fin apexes are joined to the tube
B: some of the fin apexes are separated from the tube
C: all of the fin apexes are separated from the tube

In addition, the symbols shown in the "Tube Penetration" column in Table 2 are as follows.
A: corrosion that penetrates the tubes has not occurred
B: corrosion that penetrates the tubes has occurred

### [Table 1]

**(Table 1)**

| | | | Chemical Composition (mass%) | | | | | | | | | |
|---|---|---|---|---|---|---|---|---|---|---|---|---|
| | | | Si | Fe | Cu | Mn | Mg | Cr | Zn | Ti | Zr | Al |
| Test Piece S1 | Tube | | 0.10 | 0.16 | 0.42 | 0.12 | < 0.01 | < 0.01 | < 0.01 | 0.11 | - | Bal. |
| | Fin | | 2.50 | 0.22 | 0.01 | 1.20 | < 0.01 | < 0.01 | 1.48 | 0.03 | - | Bal. |
| Test Piece R1 | Tube | | 0.10 | 0.16 | 0.42 | 0.12 | < 0.01 | < 0.01 | < 0.01 | 0.11 | - | Bal. |
| | Fin | Brazing Material | 7.71 | 0.16 | 0.01 | 0.02 | < 0.01 | < 0.01 | 0.02 | 0.03 | 0.01 | Bal. |
| | | Core Material | 0.73 | 0.32 | 0.02 | 1.55 | < 0.01 | < 0.01 | 1.48 | 0.03 | 0.12 | Bal. |

### [Table 2]

**(Table 2)**

| | Natural Electrode Potential (mV vs SCE) | | | | SWAAT Test | | | |
|---|---|---|---|---|---|---|---|---|
| | | | | | After 20 days | | After 40 days | |
| | Ets | Eti | Ef | Ej | Fin Separation | Tube Penetration | Fin Separation | Tube Penetration |
| Test Piece S1 | -871 | -711 | -893 | -874 | A | A | A | A |
| Test Piece R1 | -819 | -712 | -821 | -921 | B | A | C | B |

As shown in Table 1, the mini core test piece S1 has a single layer fin 2 made from an aluminum alloy having the aforementioned specific chemical composition, and tubes 3, which have a sacrificial anode layer 31 on the outer surfaces. In addition, the natural electrode potentials Ets, Eti, Ef, and Ej of each region in the mini core test piece S1 satisfy all of the aforementioned four conditions. Therefore, the mini core test piece S1 can avoid an early loss of any of the sacrificial anode layer 31, the fin 2, or the brazed joints 4, and has a corrosion resistance that excelled.

On the other hand, the mini core test piece R1, which has a fin made from a double-sided brazing sheet, has inferior corrosion resistance compared to the mini core test piece S1, and fin separation from the tubes 3 occurs at the point in time at which the SWAAT test has continued for 20 days. In addition, if the SWAAT test of the mini core test piece R1 is continued for 40 days, the fin completely separates from the tubes 3 and corrosion that penetrates the tubes 3 occurs. In terms of the reasons for this, the following reasons are, for example, conceivable. Because the fluidity of the molten braze resulting from melting the brazing material is high when a brazing sheet is used for the fin, it is conceivable that the molten filler containing Zn atoms readily migrates to the fillets of the brazed joints. As a result, it is conceivable that the Zn content in the brazed joints will become excessively great, and the natural electrode potential Ej of the brazed joints is likely to be excessively low.

In addition, it is conceivable that the diffusion of Zn from the molten braze to the core material tends to be insufficient owing to the fact that the molten filler readily flows when brazing. As a result, it is conceivable that the effect of the sacrificial anode layer formed on the surface of the fin after brazing is insufficient, and corrosion is likely to progress as far as the interior of the tube(s).

Here, although aspects of the heat exchanger core and the method for manufacturing the same according to the present invention have been described based on exemplary embodiments and experimental examples, the specific aspects of the heat exchanger core and the method for manufacturing the same according to the present invention are not limited to the aspects in the exemplary embodiments and the experimental examples, but rather the configuration can be modified as appropriate within a scope that does not depart from the gist of the present invention.

For example, the heat exchanger core may take forms as in the following [1] and [2].
[1] A heat exchanger core having:
   (a) fin(s), having a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 5.0 mass% or less, the balance consisting of Al and unavoidable impurities;
   (a) tube(s), made from an aluminum alloy extruded material containing Cu: more than 0.05 mass% and 0.6 mass% or less; and
   (a) brazed joint(s), joining the fin(s) and the tube(s), wherein:
      a sacrificial anode layer, which has a natural electrode potential lower than that at an inner surface of the tube(s), is formed on an outer surface of the tube(s), and the four conditions of:
      (1) the natural electrode potential of the inner surface of the tube(s), when the natural electrode potential of the sacrificial anode layer is used as the reference, is +50 mV or more; (2) the natural electrode potential of the sacrificial anode layer, when the natural electrode potential of (a) fillet(s) in the brazed joint(s) is used as the reference, is +100 mV or less; (3) the natural electrode potential of the sacrificial anode layer, when the natural electrode potential of the fin(s) is used as the reference, is -80 mV or more and +150 mV or less; and (4) the natural electrode potential of the fin(s) is lower than the natural electrode potential of the fillet(s), or the natural electrode potential of the fin(s) is greater than or equal to the natural electrode potential of the fillet(s) and the absolute value of the potential difference between the natural electrode potential of the fin(s) and the average of the natural electrode potential of the fin(s), the natural electrode potential of the fillet(s), and the natural electrode potential of the sacrificial anode layer is 40 mV or less are satisfied.
[2] The heat exchanger core according to (1), wherein the fin(s) further contain(s) one or two or more elements selected from the group consisting of Zr: more than 0 mass% and 0.3 mass% or less, Cr: more than 0 mass% and 0.3 mass% or less, Ti: more than 0 mass% and 0.3 mass% or less, V: more than 0 mass% and 0.3 mass% or less, Ni: more than 0 mass% and 0.8 mass% or less, Mg: more than 0 mass% and 0.1 mass% or less, In: more than 0 mass% and 0.03 mass% or less, and Sn: more than 0 mass% and 0.1 mass% or less.

In addition, a method for manufacturing the heat exchanger core may take the forms shown in the following [3] to [6].

[3] A method for manufacturing the heat exchanger core according to [1] or [2] wherein
an assembly is assembled by alternately overlaying the fin(s), which has (have) a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 4.0 mass% or less, the balance consisting of Al and unavoidable impurities, and the tube(s) made from an aluminum alloy extruded material containing Cu: more than 0.05 mass% and 0.6 mass% or less,
by heating the assembly and performing brazing of the assembly in an atmosphere containing zinc vapor, (a) brazed joint(s) form(s) between the fin(s) and the tube(s), and the sacrificial anode layer forms on the outer surface of the tube(s).

[4] The method for manufacturing a heat exchanger core according to [3], wherein the fin(s) further contain(s) one or two or more elements selected from the group consisting of Zr: more than 0 mass% and 0.3 mass% or less, Cr: more than 0 mass% and 0.3 mass% or less, Ti: more than 0 mass% and 0.3 mass% or less, V: more than 0 mass% and 0.3 mass% or less, Ni: more than 0 mass% and 0.8 mass% or less, Mg: more than 0 mass% and 0.1 mass% or less, In: more than 0 mass% and 0.03 mass% or less, and Sn: more than 0 mass% and 0.1 mass% or less.

[5] The method for manufacturing a heat exchanger core according to [3] or [4], wherein the assembly is assembled using the tube(s), which has (have) been provided with a sprayed Zn coating on the outer surface.

[6] The method for manufacturing a heat exchanger core according to [3] or [4], wherein the content of Zn in the fin(s) after brazing is greater than or equal to 0.1 mass% with respect to the content of Zn in the fin(s) before brazing.

## Claims

1. A heat exchanger core having:
(a) fin(s), having a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 5.0 mass% or less, the balance consisting of Al and unavoidable impurities;
(a) tube(s), made from an aluminum alloy extruded material containing Cu: more than 0.05 mass% and 0.6 mass% or less; and
(a) brazed joint(s), joining the fin(s) and the tube(s), wherein:
a sacrificial anode layer, which has a natural electrode potential lower than that at an inner surface of the tube(s), is formed on an outer surface of the tube(s), and the four conditions of:
(1) the natural electrode potential of the inner surface of the tube(s), when the natural electrode potential of the sacrificial anode layer is used as the reference, is +50 mV or more; (2) the natural electrode potential of the sacrificial anode layer, when the natural electrode potential of (a) fillet(s) in the brazed joint(s) is used as the reference, is +100 mV or less; (3) the natural electrode potential of the sacrificial anode layer, when the natural electrode potential of the fin(s) is used as the reference, is -80 mV or more and +150 mV or less; and (4) the natural electrode potential of the fin(s) is lower than the natural electrode potential of the fillet(s), or the natural electrode potential of the fin(s) is greater than or equal to the natural electrode potential of the fillet(s) and the absolute value of the potential difference between the natural electrode potential of the fin(s) and the average of the natural electrode potential of the fin(s), the natural electrode potential of the fillet(s), and the natural electrode potential of the sacrificial anode layer is 40 mV or less are satisfied.

2. The heat exchanger core according to claim 1, wherein the fin(s) further contain(s) one or two or more elements selected from the group consisting of Zr: more than 0 mass% and 0.3 mass% or less, Cr: more than 0 mass% and 0.3 mass% or less, Ti: more than 0 mass% and 0.3 mass% or less, V: more than 0 mass% and 0.3 mass% or less, Ni: more than 0 mass% and 0.8 mass% or less, Mg: more than 0 mass% and 0.1 mass% or less, In: more than 0 mass% and 0.03 mass% or less, and Sn: more than 0 mass% and 0.1 mass% or less.

3. A method for manufacturing the heat exchanger core according to claim 1 or 2 wherein:
the assembly is assembled by alternately overlaying the fin(s), which has (have) a chemical composition comprising Si: 2.0 mass% or more and 3.0 mass% or less, Fe: 0.05 mass% or more and 1.2 mass% or less, Cu: 0 mass% or more and 0.25 mass% or less, Mn: 0.3 mass% or more and 1.8 mass% or less, and Zn: 0.3 mass% or more and 4.0 mass% or less, the balance consisting of Al and unavoidable impurities, and the tube(s) made from an aluminum alloy extruded material containing Cu: more than 0.05 mass% and 0.6 mass% or less,
by heating the assembly and performing brazing of the assembly in an atmosphere containing zinc vapor, the brazed joint(s) form(s) between the fin(s) and the tube(s), and a sacrificial anode layer forms on the outer surface of the tube(s).

4. The method for manufacturing the heat exchanger core according to claim 3, wherein the fin(s) further contain(s) one or two or more elements selected from the group consisting of Zr: more than 0 mass% and 0.3 mass% or less, Cr: more than 0 mass% and 0.3 mass% or less, Ti: more than 0 mass% and 0.3 mass% or less, V: more than 0 mass% and 0.3 mass% or less, Ni: more than 0 mass% and 0.8 mass% or less, Mg: more than 0 mass% and 0.1 mass% or less, In: more than 0 mass% and 0.03 mass% or less, and Sn: more than 0 mass% and 0.1 mass% or less.

5. The method for manufacturing the heat exchanger core according to claim 3 or 4, wherein the assembly is assembled using the tube(s), which has been provided with a sprayed Zn coating on the outer surface.

6. The method for manufacturing the heat exchanger core according to any one of claims 3 to 5, wherein the content of Zn in the fin(s) after brazing is greater than or equal to 0.1 mass% relative to the content of Zn in the fin(s) before brazing.
